**Europäisches Patentamt**

**European Patent Office**

**Office européen des brevets**

(19)

(11) Numéro de publication : **0 431 137 B1**

(12)
# FASCICULE DE BREVET EUROPEEN

(45) Date de publication du fascicule du brevet :
**22.07.92 Bulletin 92/30**

(51) Int. Cl.⁵ : **E04C 5/12,** F16G 11/04

(21) Numéro de dépôt : **90910129.7**

(22) Date de dépôt : **22.06.90**

(86) Numéro de dépôt international :
**PCT/FR90/00459**

(87) Numéro de publication internationale :
**WO 91/00401 10.01.91 Gazette 91/02**

(54) **DISPOSITIF DE BLOCAGE POUR ARMATURE ALLONGEE SOUS TENSION.**

(30) Priorité : **27.06.89 FR 8908554**

(43) Date de publication de la demande :
**12.06.91 Bulletin 91/24**

(45) Mention de la délivrance du brevet :
**22.07.92 Bulletin 92/30**

(84) Etats contractants désignés :
**AT BE CH DE DK ES GB IT LI LU NL SE**

(56) Documents cités :
**EP-A- 322 317**
**DE-A- 3 438 355**
**DE-A- 3 536 926**
**DE-B- 1 234 969**
**GB-A- 2 077 343**
**US-A- 4 146 951**

(73) Titulaire : **Chaize, Alain**
**3, rue Greneta**
**F-75003 Paris (FR)**

(72) Inventeur : **Chaize, Alain**
**3, rue Greneta**
**F-75003 Paris (FR)**

(74) Mandataire : **Bouju, André**
**Cabinet Bouju Derambure (Bugnion) S.A. 38**
**avenue de la Grande Armée**
**F-75017 Paris (FR)**

Jouve, 18, rue Saint-Denis, 75001 PARIS

## Description

La présente invention concerne un dispositif de blocage pour une armature allongée sous tension telle que tirant, toron, câble ou analogue.

On connaît de tels dispositifs de blocage qui comprennent d'une manière générale une plaque d'appui percée d'au moins une ouverture évasée dans laquelle pénètre une clavette de forme complémentaire traversée axialement par l'armature avec laquelle elle vient en prise par l'intermédiaire d'une denture intérieure, ladite clavette étant destinée à être enfoncée de force dans l'ouverture par une pression initiale puis par la tension de l'armature.

Dans sa demande de brevet antérieure EP-A-0 322 317 citée au titre de l'article 54(3) CBE, le demandeur a décrit une clavette comportant sur une partie au moins de sa surface extérieure, une denture anti-recul destinée à venir en prise avec la paroi intérieure de l'ouverture de la plaque d'appui lorsque cette clavette a été enfoncée dans ladite ouverture.

Une telle denture, dont les dents s'incrustent dans le métal de ladite paroi intérieure, exerce l'effet anti-recul recherché et maintient l'armature en place par rapport à la plaque d'appui même si cette armature ne se trouve plus tendue pour quelque raison que ce soit, vibrations, vieillissement de l'ouvrage concerné, et...

Une telle denture donne donc satisfaction et remplit la fonction pour laquelle elle a été conçue.

Toutefois, lors de la mise sous tension de l'armature et à la fin de cette opération, les dents de cette denture, qui commencent à s'incruster dans le métal de la paroi intérieure de la plaque d'appui, ont tendance à s'opposer à une pénétration plus profonde de la clavette dans l'ouverture. Ainsi, et par rapport à une clavette dont la surface extérieure serait lisse, une clavette dont la surface extérieure comporte une denture anti-recul risque de s'enfoncer moins pour une pression d'enfoncement donnée, ou ne s'enfonce de la même façon que pour une pression d'enfoncement plus importante.

Le demandeur a donc cherché à perfectionner ladite clavette pour proposer une clavette permettant de maximaliser l'accrochage anti-recul des dents de la denture extérieure dans l'ouverture de la plaque d'appui, tout en minimisant la force nécessaire pour l'enfoncement de cette clavette.

Suivant l'invention, le dispositif de blocage du type précité est caractérisé en ce que cette denture présente dans le sens de la longueur de la clavette des zones dentées alternées avec des zones évidées non dentées.

Du fait de la présence des zones évidées non dentées, la surface de contact des dents de la surface extérieure de la clavette avec la paroi intérieure de l'ouverture de la plaque d'appui se trouve sensiblement réduite, et les dents en nombre réduit exercent une résistance à l'enfoncement de la clavette sensiblement réduite par rapport à la clavette antérieure. On peut donc dire que la clavette s'enfonce et glisse plus facilement à l'intérieur de l'ouverture.

De même, la force de serrage exercée par la plaque d'appui sur la surface extérieure de la clavette s'exerce en fait sur une surface de dents réduite. Ceci crée donc une pression de contact entre les dents et la paroi de l'ouverture qui est proportionnelle à celle obtenue dans le cas de la clavette antérieure dans un rapport qui est l'inverse du rapport entre les surfaces de dents respectives. Les dents vont donc s'incruster plus profondément dans le métal de la paroi de l'ouverture pour mieux s'ancrer dans celui-ci et avoir un effet anti-recul plus puissant.

On constate en outre l'effet surprenant suivant : du fait de la pression élevée exercée par les dents, il se produit un fluage du métal de la paroi de l'ouverture : le métal, repoussé par les dents, flue vers les zônes de la paroi situées en regard des zones évidées non dentées et y crée des excroissances en saillie vers l'intérieur de l'ouverture par rapport à la surface de la paroi initiale de celle-ci : ces excroissances constituent ainsi avec les dents adjacentes des ancrages exerçant un très important effet anti-recul supplémentaire.

Suivant une version avantageuse de l'invention, les dents de la denture extérieure sont régulièrement espacées et s'étendent à partir de la surface extérieure sensiblement tronconique de la clavette, et l'angle au sommet de la surface tronconique reliant les fonds des dents est sensiblement identique à l'angle de la surface tronconique intérieure de l'ouverture de la plaque d'appui.

On obtient ainsi un excellent contact entre la surface extérieure de la clavette et la paroi intérieure de l'ouverture de la plaque d'appui sans déformation de la clavette.

Suivant une version préférée de l'invention, les dents de la denture intérieure sont régulièrement espacées et s'étendent à partir de la surface intérieure sensiblement cylindrique de la clavette, et une partie au moins des dents de la denture intérieure à l'extrémité avant de plus petit diamètre de la clavette sont tronquées à leur sommet suivant une surface sensiblement tronconique coaxiale à la clavette et s'évasant vers l'extrémité arrière de plus grand diamètre de celle-ci.

Les dents tronquées à l'avant de la clavette ont ainsi peu tendance à s'incruster dans le métal de l'armature, et exercent par contre sur la surface de celle-ci un serrage très puissant, ce qui est doublement bénéfique en cet endroit où l'armature est encore soumise à sa tension nominale.

Par contre, les dents moins tronquées ou non tronquées à la partie arrière de la clavette peuvent sans inconvénient s'incruster profondément dans le métal de l'armature pour ancrer solidement cette dernière en cet endroit où elle n'est pratiquement plus tendue.

Selon une version intéressante de l'invention, une partie au moins des dents de la denture extérieure de la clavette sont tronquées à leur sommet, la hauteur résiduelle des dents situées du côté de l'extrémité arrière de la clavette étant inférieure à celle des dents situées du côté de l'extrémité avant de la clavette.

D'autres particularités et avantages de l'invention apparaîtront encore dans la description ci-après.

Aux dessins annexés, donnés à titre d'exemples non limitatifs :
 – la figure 1 est une demi-vue en coupe axiale d'un dispositif de blocage conforme à la présente invention ;
 – la figure 2 est une vue partielle agrandie d'un détail de la figure 1 concernant une clavette selon un autre mode de réalisation de l'invention ;
 – la figure 3 est une vue semblable à la figure 2 concernant un autre mode de réalisation de l'invention ;
 – la figure 4 est une vue partielle en coupe très agrandie d'un détail d'une denture extérieure conforme à la présente invention ;
 – la figure 5 est un schéma en coupe illustrant le mode d'action d'une denture extérieure conforme à un autre mode de la présente invention ;
 – la figure 6 est une vue en coupe d'un dispositif de blocage conforme à un autre mode de réalisation de l'invention et destiné à une armature composée de plusieurs éléments ancrés séparément.

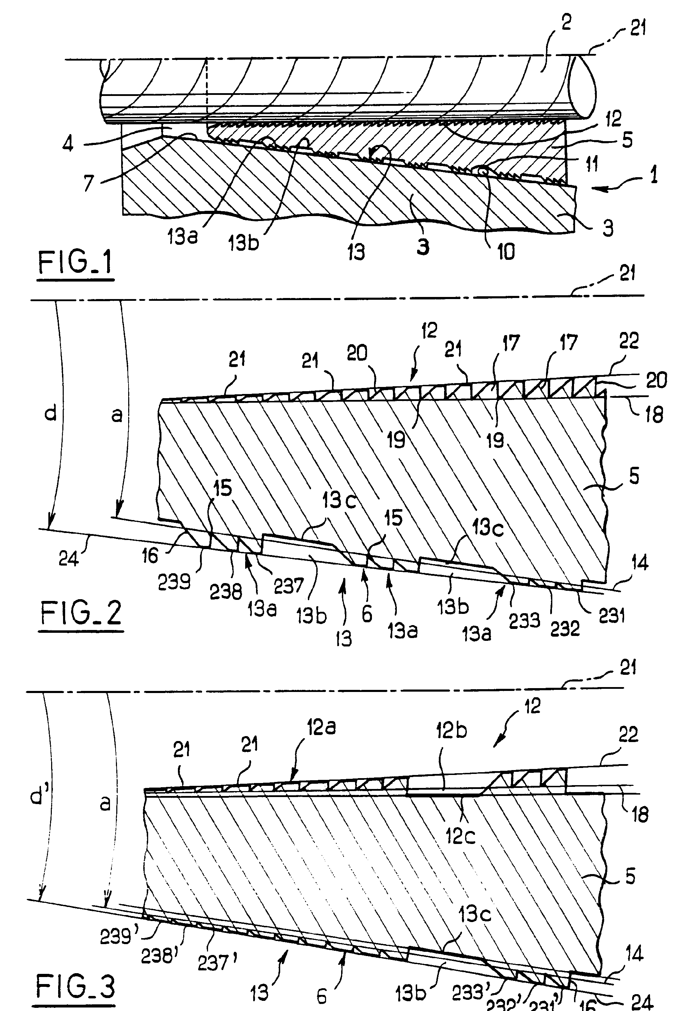

Dans la réalisation particulière de l'invention représentée à la figure 1, le dispositif de blocage 1 pour une armature allongée sous tension 2 telle que tirant, toron, câble ou analogue, comprend une plaque d'appui 3 percée d'une ouverture évasée 4 dans laquelle pénètre une clavette 5 de forme complémentaire traversée axialement par l'armature 2 avec laquelle elle vient en prise par l'intermédiaire d'une denture intérieure 12.

La clavette 5 est constituée de façon connue par trois secteurs indépendants séparés par trois entailles radiales qui s'étendent sur toute la longueur de la clavette. Ces trois secteurs sont retenus par un jonc 10 disposé dans une gorge 11 ménagée sur la surface extérieure 6 de la clavette 5.

La surface intérieure de la clavette 5 est munie d'une denture 12 dont les dents s'incrustent dans l'armature 2 pour s'opposer à un retrait de celle-ci vers l'intérieur de l'ouvrage. A cet effet, la surface intérieure de la clavette a été, de façon également connue, traitée superficiellement pour avoir une dureté importante, de l'ordre de 56 HRC (environ 190 kg/mm$^2$), pour faciliter l'incrustation des dents dans l'armature.

De ce fait, la tension de l'armature 2 a pour effet d'entraîner et de tirer la clavette 5 vers le fond de l'ouverture évasée 4 de la plaque d'appui 3, ce qui provoque l'effet auto-bloquant de la clavette 5.

Comme représenté plus en détail aux figures 2 à 5, les dents 17 de la denture intérieure 12 sont régulièrement espacées et s'étendent à partir de la surface intérieure cylindrique 18 reliant les fonds 19 des filets 20 de cette denture intérieure 12.

Par ailleurs, la clavette 5 présente, sur toute sa surface extérieure 6, une denture anti-recul 13 en saillie destinée à venir en prise avec la paroi 7 de l'ouverture 4 de la plaque d'appui 3 lorsque cette clavette 5 a été enfoncée dans ladite ouverture 4.

La surface extérieure 6 de la clavette 5 est, comme la surface intérieure, traitée superficiellement au moins au niveau de la denture 13 pour avoir une dureté importante et du même ordre de grandeur (56 HRC ou 190 kg/mm$^2$).

Ceci facilite l'incrustation de la denture anti-recul 13 dans le métal de la paroi intérieure 7 de l'ouverture 4 de la plaque d'appui 3 ; ce métal de la paroi intérieure 7 peut avoir de son côté une dureté de l'ordre de 110 kg/mm$^2$, donc plus faible que celle de la surface extérieure de la clavette.

Suivant l'invention, et comme représenté aux figures, cette denture 13 présente dans le sens de la longueur de la clavette 5 des zones dentées 13a alternées avec des zones évidées non dentées 13b.

Les surfaces 13c des zones évidées non dentées 13b sont situées à l'intérieur de la surface 14 reliant les fonds des dents de la denture 13 ; elles pourraient également être confondues avec cette surface (voir figures 2 à 4).

Comme représenté, les dents 22 de la denture extérieure 13 sont régulièrement espacées et s'étendent à partir de la surface tronconique 14. L'angle au sommet a de la surface tronconique 14 correspond sensiblement à l'angle de la surface tronconique intérieure 7 de l'ouverture 4 de la plaque d'appui 3.

Dans la réalisation de la figure 2, les dents 17 de la denture intérieure 12 sont tronquées à leur sommet 21 suivant une surface 22 sensiblement tronconique coaxiale à la clavette 5 et s'évasant vers l'extrémité arrière de plus grand diamètre de celle-ci.

Dans cette même réalisation, les dents 23 de la denture extérieure 13 sont également tronquées à leur sommet par une surface conique 24 d'angle au sommet d inférieur à l'angle a : de ce fait, la hauteur résiduelle des dents 231, 232, 233 situées à l'extrémité arrière de la clavette 5 est inférieure à celle des dents 237, 238, 239 situées à l'extrémité avant de plus petit diamètre de la clavette 5.

Dans la réalisation de la figure 3, la denture intérieure 12 tronquée présente également des zones dentées alternées avec des zones évidées non dentées 12b.

Les dents 23 de la denture extérieure 13 sont tronquées à leur sommet par une surface conique 24 d'angle au sommet d' supérieur à l'angle a : la hauteur résiduelle des dents 231', 232', 233' situées à l'extrémité arrière de la clavette 5 est supérieure à celle des dents 237', 238', 239' situées à l'extrémité avant de plus petit diamètre de celle-ci.

Les zones évidées non dentées 12b et 13b sont prévues uniquement dans la partie arrière de plus grand diamètre de la clavette 5, là où les hauteurs résiduelles des dents respectives 17 et 23 sont les plus grandes, pour une raison qui sera précisée plus loin.

D'une manière générale, les dents respectives 17 et 23 des dentures intérieure 12 et extérieure 13 peuvent avoir un profil quelconque. Elles peuvent être symétriques ou dissymétriques, disposées en anneaux ou en spirale et avoir des dimensions et formes quelconques. Les dents 17 peuvent avoir des formes et dimensions égales à celles des dents 23 ou différentes de celle-ci.

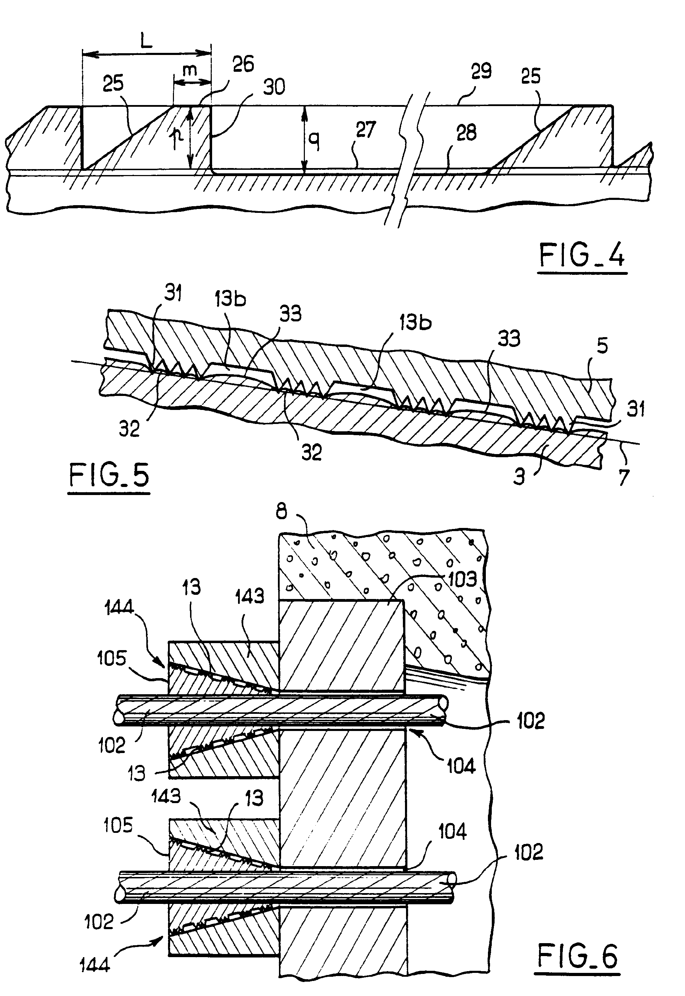

Dans la réalisation de la figure 4, utilisable pour les deux dentures 12 et 13, les dents 25 sont des dents annulaires dissymétriques qui constituent ainsi des dents du loup. Ces dents 25 ont par exemple un pas L de 0,5 mm et ont leur sommet tronqué en 26 parallèlement à la surface 27 reliant les fonds de filets ; la hauteur p du sommet tronqué 26 par rapport à la surface 27 est par exemple de 0,2 mm, et la hauteur q du même sommet tronqué 26 par rapport à la surface 28 des zones évidées non dentées 29 est par exemple de 0,3 mm. Le flanc de filet 30 s'opposant au recul est par exemple perpendiculaire aux surfaces 27 et 28.

La longueur des zones dentées et la longueur des zones évidées non dentées peuvent être égales, par exemple égales à 5 mm.

Dans la réalisation de la figure 5 qui illustre l'effet de la clavette conforme à la présente invention et qui sera commentée plus loin, les dents 31 sont symétriques et ont une section en forme de triangle isocèle.

Dans la réalisation de la figure 6, qui représente un dispositif prévu pour le blocage individuel de divers torons 102 d'une armature, la plaque d'appui 103 encastrée dans le massif en béton 8 présente plusieurs ouvertures 104 réparties autour de son centre pour le passage desdits torons, chaque toron 102 étant bloqué par une clavette 105, une partie au moins desdites clavettes 105 présentant sur sa périphérie une denture anti-recul 13 conforme à l'invention.

Dans l'exemple représenté, les clavettes 105 sont enfoncées dans les ouvertures tronconiques 144 de blocs d'appui 143 rapportés et fixés sur la plaque d'appui 103.

Les clavettes 5, 105 conformes à la présente invention sont réalisées facilement en plusieurs passes d'usinage. On usine d'abord d'une manière connue les dentures 12 et 13. Puis on tronque le cas échéant l'une ou l'autre ou l'ensemble de ces dentures. Enfin, on ménage les zones évidées non dentées 13b et éventuellement 12b.

On va maintenant décrire le mode d'utilisation des divers types de clavettes conformes à la présente invention.

La mise sous tension d'une armature est une opération connue qui n'a pas besoin d'être décrite ici. A la fin de cette opération, on pousse à force la clavette 5 dans l'ouverture 4 pour commencer à ancrer les dents 17 de la denture intérieure 12 dans le métal de l'armature et les dents 23 de la denture extérieure 13 dans le métal de la paroi intérieure 7. On relâche ensuite l'armature tendue 2, ce qui termine l'ancrage de la clavette 5 par rapport à l'armature 2 et par rapport à la plaque d'appui 3.

Comme représenté en détail à la figure 5, la force de serrage de l'armature s'exerce par l'intermédiaire d'un nombre réduit de dents. Ces dents exercent donc une pression sensiblement plus grande que dans le cas d'une denture continue, selon un coefficient multiplicateur égal à l'inverse du rapport entre les surfaces de contact respectives.

Dans le cas simple représenté de dents 31 non tronquées constituant la denture extérieure 13 d'une clavette 5 en contact avec la paroi intérieure 7 de l'ouverture de la plaque d'appui 3, les extrémités des dents 31 pénétrant dans le métal de la paroi 7 refoulent le métal qui flue de deux manières : le métal flue entre les extrémités de deux dents adjacentes, ce qui donne l'effet de bombement représenté en 32 à la figure. En outre, le métal de la zone en regard de la zone dentée flue latéralement vers la région en regard de la zone évidée non dentée 13b de la clavette, ce qui donne une excroissance 33 en saillie par rapport à la paroi initiale 7. Cette excroissance 33 va à son tour exercer vis à vis des dents 31 adjacentes un puissant effet anti-recul.

C'est pour laisser ce fluage s'opérer librement qu'il est prévu que les surfaces 13c des zones évidées 13b soient comprises de préférence à l'intérieur de la surface reliant les fonds des filets 16.

Le phénomène est identique pour les autres formes de dents, celles des dents représentées à la figure 4 comme celles des dents tronquées 231 à 239 et 231' à 239' représentées respectivement aux figures 2 et 3. Bien entendu, les dents les plus tronquées 231, 232, 233 à la figure 2 et 237', 238' et 239' à la figure 3 pénètrent très peu dans le métal de la paroi 7 et appuient par contre très fortement sur ladite paroi. Ces dents, ne pénétrant que très peu et exerçant une pression relativement plus faible que les dents tronquées du fait de leur surface de contact importante, ne provoquent que peu ou pas de fluage..C'est la raison pour laquelle, à la figure 3, les zones évidées non dentées 13b ne sont prévues que dans la région des dents 231', 232', 233' peu ou pas tronquées susceptibles de provoquer un fluage important.

Le phénomène est également identique pour ce qui concerne la denture intérieure 12 en contact avec l'armature 2. Toutefois, si l'armature 2 est un toron constitué de fils torsadés, le phénomène aura moins d'ampleur que dans le cas précédent puisque la denture n'est en contact qu'avec la périphérie des fils torsadés et n'est donc en contact avec l'armature que par une partie de sa surface.

Dans tous les cas, l'angle a de la surface 14 reliant les fonds des filets de la denture extérieure de la clavette correspondant sensiblement à l'angle au sommet de la paroi intérieure 7 de l'ouverture 4 de la plaque d'appui, les parois intérieure et extérieure de la clavette s'appuient très bien respectivement sur l'armature et sur la paroi 7 de la plaque d'appui, sans déformation de la clavette et donc sans risque de rupture de celle-ci. Quand l'une ou l'autre desdites surfaces intérieure et extérieure de la clavette est tronquée, ou quand ces deux surfaces sont tronquées, on peut considérer que la pénétration des dents qui augmente lorsque la troncature diminue, compense sensiblement cette troncature pour maintenir cet excellent contact entre la clavette et l'armature d'une part, la paroi de l'ouverture d'autre part.

Bien entendu, l'invention n'est pas limitée aux modes de réalisation que l'on vient de décrire.

## Revendications

1. Dispositif de blocage pour une armature allongée sous tension telle que tirant, toron, câble ou analogue (2, 102), comprenant une plaque d'appui (3, 143) percée d'au moins une ouverture évasée (4, 144) dans laquelle pénètre une clavette (5, 105) de forme complémentaire traversée axialement par l'armature (2, 102) avec laquelle elle vient en prise par l'intermédiaire d'une denture intérieure (12), ladite clavette (5, 105) étant destinée à être enfoncée de force dans l'ouverture (4, 144) par une pression initiale puis par la tension de l'armature, la clavette (5, 105) comportant sur une partie au moins de sa surface extérieure, une denture anti-recul (13) destinée à venir en prise avec la paroi de l'ouverture (4, 144) de la plaque d'appui (3, 103) lorsque cette clavette (5, 105) a été enfoncée dans ladite ouverture (4, 144), cette denture (13) présentant dans le sens de la longueur de la clavette (5, 105) des zones dentées (13a) alternées avec des zones évidées non dentées (13b).

2. Dispositif conforme à la revendication 1, caractérisé en ce que les surfaces (13c) des zones évidées non dentées (13b) sont situées à l'intérieur de la surface (14) reliant les fonds (15) des filets (16) de la denture (13), ou sont confondues avec cette surface (14).

3. Dispositif conforme à l'une des revendications 1 ou 2, dans lequel les dents de la denture intérieure (12) de la clavette (5, 105) sont régulièrement espacées et s'étendent à partir de la surface intérieure sensiblement cylindrique (18) reliant les fonds (19) des filets de ladite denture intérieure (12), caractérisé en ce qu'une partie au moins des dents (17) de la denture intérieure (12) sont tronquées à leur sommet (21) suivant une surface sensiblement tronconique (22) coaxiale à la clavette et s'évasant vers l'extrémité arrière, de plus grand diamètre, de celle-ci.

4. Dispositif conforme à l'une des revendications 1 à 3, dans lequel les dents (23) de la denture extérieure (13) de la clavette (5, 105) sont régulièrement espacées, et s'étendent à partir de la surface extérieure sensiblement tronconique (14) reliant les fonds (15) des filets de ladite denture extérieure (13), caractérisé en ce que l'angle au sommet (a) de la surface tronconique (14) correspond sensiblement à l'angle de la surface tronconique intérieure (7) de l'ouverture (4, 144) de la plaque d'appui (3, 143).

5. Dispositif conforme à l'une des revendications 1 à 4, caractérisé en ce qu'une partie au moins des dents de la denture extérieure (13) de la clavette (5, 105) sont tronquées à leur sommet.

6. Dispositif conforme à la revendication 5, caractérisé en ce que la hauteur résiduelle des dents (231, 232, 233) situées du côté de l'extrémité arrière de la clavette est inférieure à celle des dents (237, 238, 239) situées du côté de l'extrémité avant, de plus petit diamètre, de la clavette.

7. Dispositif conforme à l'une des revendications 1 à 6, caractérisé en ce que la denture anti-recul (13), est ménagée sur toute la surface extérieure de la clavette (5, 105).

8. Dispositif conforme à l'une des revendications 1 à 7, caractérisé en ce que la denture intérieure (12) présente des zones dentées (12a) alternées avec des zones évidées non dentées (12b).

9. Dispositif conforme à l'une des revendications 1 à 8 pour le blocage individuel de divers torons (102) d'une armature, caractérisé en ce que la plaque d'appui (103) présente plusieurs ouvertures (143) réparties autour de son centre pour le passage desdits torons, chaque toron (102) étant bloqué par une clavette (105), une partie au moins desdites clavettes (105) présentant sur sa périphérie une denture anti-recul (13).

10. Dispositif conforme à la revendication 9, caractérisé en ce que les clavettes (105) sont enfoncées dans les ouvertures tronconiques (144) de blocs d'appui (143) rapportés et fixés sur la plaque d'appui (103).

## Patentansprüche

1. Einspanneinrichtung für eine unter Zug stehende langgestreckte Bewehrung wie etwa einen Zugstab, eine Litze, ein Kabel oder dergleichen (2, 102), mit einer Abstützplatte (3, 143), durch die wenigstens eine aufgeweitete Öffnung (4, 144) führt, in die ein Keil (5, 105) von komplementärer Form eindringt, der in axialer Richtung von der Bewehrung (2, 102) durchsetzt wird, mit der er über eine Innenverzahnung (12) in Eingriff gelangt, wobei der Keil (5, 105) dazu vorgesehen ist, durch einen Anfangsdruck und dann durch den Zug der Bewehrung mit Kraft in die Öffnung (4, 144) eingetrieben zu werden, wobei der Keil (5, 105) auf wenigstens einem Teil seiner Außenfläche eine Rückzug-Sperrverzahnung (13) aufweist, die dazu vorgesehen ist, mit der Wand der Öffnung (4, 144) der Abstützplatte (3, 103) in Eingriff zu gelangen, wenn dieser Keil (5, 105) in die Öffnung (4, 144) eingetrieben worden ist, wobei diese Verzahnung (13) in Längsrichtung des Keils (5, 105) abwechselnd gezahnte Zonen (13a) und nicht gezahnte, ausgesparte Zonen (13b) aufweist.

2. Einrichtung gemäß Anspruch 1, dadurch gekennzeichnet, daß sich die Oberflächen (13c) der nicht gezahnten, ausgesparten Zonen (13b) hinter der die Sohlen (15) der Rippen (16) der Verzahnung (13) verbindenden Oberfläche (14) befinden oder mit dieser Oberfläche (14) im wesentlichen bündig sind.

3. Einrichtung gemäß einem der Ansprüche 1 oder 2, in der die Zähne der Innenverzahnung (12) des Keils (5, 105) in einem regelmäßigen Abstand angeordnet sind und sich von der Innenfläche im wesentlichen zylindrisch (18) erstrecken und dabei die Sohlen (19) der Rippen der Innenverzahnung (12) verbinden, dadurch gekennzeichnet, daß wenigstens ein Teil der Zähne (17) der Innenverzahnung (12) an ihren obersten Punkten (21), die einer im wesentlichen kegelstumpfförmigen Oberfläche (22) folgen, welche zum Keil koaxial ist und sich in Richtung des einen größeren Durchmesser aufweisenden hinteren Endes des Keils aufweitet, abgeschnitten sind.

4. Einrichtung gemäß einem der Ansprüche 1 bis 3, in der die Zähne (23) der Außenverzahnung (13) des Keils (5, 105) in einem regelmäßigen Abstand angeordnet sind und sich von der im wesentlichen kegelstumpfförmigen Außenfläche (14), die die Sohlen (15) der Rippen der Außenverzahnung (13) verbindet, erstrecken, dadurch gekennzeichnet, daß der Spitzenwinkel (a) der kegelstumpfförmigen Oberfläche (14) im wesentlichen dem Winkel der kegelstumpfförmigen Innenfläche (7) der Öffnung (4, 144) der Abstützplatte (3, 143) entspricht.

5. Einrichtung gemäß einem der Ansprüche 1 bis 4, dadurch gekennzeichnet, daß wenigstens ein Teil der Zähne der Außenverzahnung (13) des Keils (5, 105) an ihrem höchsten jeweils Punkt abgeschnitten sind.

6. Einrichtung gemäß Anspruch 5, dadurch gekennzeichnet, daß die verbleibende Höhe der Zähne (231, 232, 233), die sich auf der Seite des hinteren Endes des Keils befinden, geringer ist als diejenige der Zähne (237, 238, 239), die sich auf der Seite des einen kleineren Durchmesser aufweisenden vorderen Endes des Keils befinden.

7. Einrichtung gemäß einem der Ansprüche 1 bis 6, dadurch gekennzeichnet, daß die Rückzug-Sperrverzahnung (13) auf der gesamten Außenfläche des Keils (5, 105) vorgesehen ist.

8. Einrichtung gemäß einem der Ansprüche 1 bis 7, dadurch gekennzeichnet, daß die Innenverzahnung (12) abwechselnd gezahnte Zonen (12a) und nicht gezahnte, ausgesparte Zonen (12b) aufweist.

9. Einrichtung gemäß einem der Ansprüche 1 bis 8 für die individuelle Einspannung von verschiedenen Litzen (102) einer Bewehrung, dadurch gekennzeichnet, daß die Abstützplatte (103) eine Mehrzahl von um ihren Mittelpunkt verteilten Öffnungen (144) für den Durchgang der Litzen aufweist, wobei jede Litze (102) von einem Keil (105) eingespannt wird und wobei wenigstens einige der Keile (105) an ihrer Umfangsfläche eine Rückzug-Sperrverzahnung (13) aufweisen.

10. Einrichtung gemäß Anspruch 9, dadurch gekennzeichnet, daß die Keile (105) in kegelstumpfförmige Öffnungen (144) von Stützblöcken (143), die mit der Abstützplatte (103) verbunden und an dieser befestigt sind, eingetrieben werden.

## Claims

1. Locking device for an elongated reinforcement under tension, such as a tension rod, strand, cable or similar (2, 102), comprising a support plate (3, 143) perforated by at least one flared opening (4, 144), into which there penetrates a wedge (5, 105) of complementary shape, said reinforcement (2, 102) extending axially through the wedge (5, 105) and engaging therewith by means of an internal toothing (12), said wedge (5, 105) being intended to be driven by force into the opening (4, 144) by an initial pressure and then by the tension of the reinforcement, the wedge (5, 105) comprising on at least a part of its external surface an anti-return toothing (13) for engaging with the wall of the opening (4, 144) of the support plate (3, 103) when this wedge (5, 105) has been driven into said opening (4, 144), said toothing (13) having, in the direction of the length of the wedge (5, 105), toothed zones (13a) alternated with recessed untoothed zones (13b).

2. Device according to Claim 1, characterized in that the surfaces (13c) of the recessed untoothed zones (13b) are situated inside the surface (14) connecting the bottoms (15) of the fillets (16) of the toothing (13), or coincide with this surface (14).

3. Device according to one of Claims 1 or 2, in which the teeth of the internal toothing (12) of the wedge (5, 105) are regularly spaced and extend from the essentially cylindrical internal surface (18) connecting the bottoms (19) of the fillets of said internal toothing (12), characterized in that at least some of the teeth (17) of the internal toothing (12) are truncated at their top (21) according to an essentially frusto-conical surface (22) which is coaxial with the wedge and flares towards the rear end of greater diameter of the latter.

4. Device according to one of Claims 1 to 3, in which the teeth (23) of the external toothing (13) of the wedge (5, 105) are regularly spaced and extend from the essentially frusto-conical external surface (14) connecting the bottoms (15) of the fillets of said external toothing (13), characterized in that the angle at the top (a) of the frusto-conical surface (14) corresponds essentially to the angle of the internal frusto-conical surface (7) of the opening (4, 144) of the support plate (3, 143).

5. Device according to one of Claims 1 to 4, characterized in that at least some of the teeth of the external toothing (13) of the wedge (5, 105) are truncated at their top.

6. Device according to Claim 5, characterized in that the residual height of the teeth (231, 232, 233) situated on the side of the rear end of the wedge is less than that of the teeth (237, 238, 239) situated on the side of the front end of smaller diameter of the wedge.

7. Device according to one of Claims 1 to 6, characterized in that the anti-return toothing (13) is made over the entire external surface of the wedge (5, 105).

8. Device according to one of Claims 1 to 7, characterized in that the internal toothing (12) has toothed zones (12a) alternated with recessed untoothed zones (12b).

9. Device according to one of Claims 1 to 8 for the individual locking of various strands (102) of a reinforcement, characterized in that the support plate (103) has a number of openings (144) distributed around its center for the passage of said strands, each strand (102) being locked by a wedge (105), at least a part of said wedges (105) having on its periphery an anti-return toothing (13).

10. Device according to Claim 9, characterized in that the wedges (105) are driven into the tapered openings (144) of support blocks (143) mounted and fixed on the support plate (103).

FIG_1

FIG_2

FIG_3

FIG_4

FIG_5

FIG_6